(19) Europäisches Patentamt
European Patent Office
Office européen des brevets

(11) **EP 1 453 223 A1**

(12) **EUROPEAN PATENT APPLICATION**
published in accordance with Art. 158(3) EPC

(43) Date of publication:
**01.09.2004 Bulletin 2004/36**

(51) Int Cl.7: **H04B 7/06**, H04B 7/26

(21) Application number: **01274899.2**

(86) International application number:
**PCT/JP2001/010520**

(22) Date of filing: **30.11.2001**

(87) International publication number:
**WO 2003/049322 (12.06.2003 Gazette 2003/24)**

(84) Designated Contracting States:
**AT BE CH CY DE DK ES FI FR GB GR IE IT LI LU MC NL PT SE TR**

(71) Applicant: **FUJITSU LIMITED**
**Kawasaki-shi, Kanagawa 211-8588 (JP)**

(72) Inventors:
• **JITSUKAWA, Daisuke**
**Kawasaki-shi, Kanagawa211-8588 (JP)**

• **SEKI, Hiroyuki**
**Kawasaki-shi, Kanagawa 211-8588 (JP)**

(74) Representative: **Hitching, Peter Matthew et al**
**Haseltine Lake,**
**Imperial House,**
**15-19 Kingsway**
**London WC2B 6UD (GB)**

(54) **TRANSMISSION DIVERSITY COMMUNICATION DEVICE**

(57)   Provided is a mobile cellular communication system or, more particularly, a transmission diversity communication system in which when the number of transmitting antennas is increased, antennas can be calibrated readily and efficiently with power saved without degradation of the characteristic concerning fading. The transmission diversity communication system is a closed-loop transmission diversity communication system. In the transmission diversity communication system, a base station transmits common pilot signals via a plurality of antennas, and a mobile station receives the common pilot signals. The mobile station transmits feedback signals, which are produced through analysis of the common pilot signals, to the base station. The base station controls a downward transmission signal on the basis of the pieces of feedback information. Herein, the plurality of antennas is divided into a plurality of groups. The common pilot signal is transmitted via a reference antenna included in each of the groups. The common pilot signal is alternately transmitted at a low frequency via the other antennas.

Fig.5

**Description**

BACKGROUND OF THE INVENTION

1. Field of the Invention

The present invention relates to a mobile cellular communication system. More particularly, the present invention is concerned with a transmission diversity communication system in which a base station controls the phase or amplitude of a signal on the basis of feedback information received from a mobile station according to a closed-loop diversity method. The base station includes a plurality of antennas. The same transmission data signal having the amplitude and phase thereof controlled differently among the transmissions via the antennas on the basis of the feedback information sent from the mobile station is transmitted together with different pilot signals via the respective antennas. The mobile station determines amplitude/phase control values, based on which the amplitude and phase of the data signal are controlled for the transmissions via the antennas, using the received pilot signals. The mobile station then transmits the feedback information, which contains the amplitude/phase control values, to the base station while multiplexing it on an upstream-channel signal.

2. Description of the Related Art

The wideband code division multiple access (WCDMA) technology implemented in third-generation mobile communication systems adopts a transmission diversity method of employing two transmitting antennas.

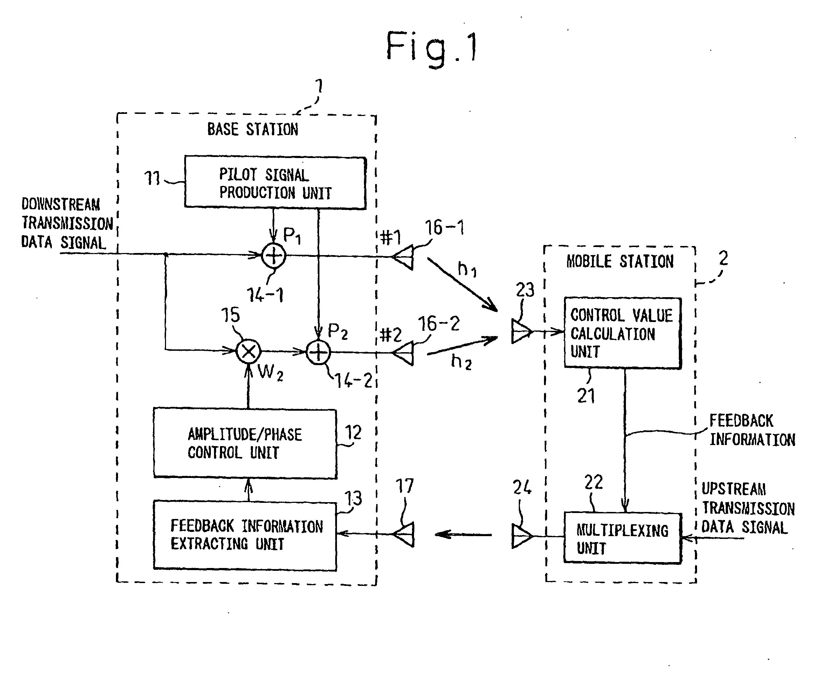

Fig. 1 shows an example of a system including two transmitting antennas. A pilot signal production unit 11 included in a base station 1 produces common pilot signals that are associated with two transmitting antennas 16-1 and 16-2. The pilot signals associated with the transmitting antennas are pulse trains P1 and P2 that are orthogonal to each other. Adders 14-1 and 14-2 append the respective pilot signals to the same downstream transmission data signal. The resultant downstream signals are transmitted to a mobile station 2 via the transmitting antennas 16-1 and 16-2 respectively.
The mobile station 2 receives the pilot signals, which are transmitted via the transmitting antennas 16-1 and 16-2, via a receiving antenna 23. A control value calculation unit 21 correlates the received pilot signals with the known pulse trains, and infers channel impulse response vectors $h_1$ and $h_2$ that indicate the responses to impulses on channels extending from the respective transmitting antennas 16-1 to 16-2 to the receiving antenna 23. The channel impulse response vectors are inferred according to the following expressions:

$$P = W^H H^H Hw \tag{1}$$

$$H = [h_1, h_2] \tag{2}$$

where $h_1$ and $h_2$ denote the channel impulse response vectors indicating the responses to impulses on the channels extending from the transmitting antennas 16-1 and 16-2. Assuming that L denotes the length of the impulse responses, the channel impulse response vectors are expressed as follows:

$$h_i = [h_{i1}, h_{i2}, ..., h_{iL}] \tag{3}$$

In this case, a weight vector w (= $[w_1, w_2]$), that is an amplitude/phase control vector based on which the amplitude and phase of a signal are controlled when transmitted via the transmitting antenna 16-1 or 16-2 installed in the base station 1 and which maximizes power P, is calculated, quantized, and then transferred as feedback information to a multiplexer 22. The multiplexer 22 multiplexes the feedback information with an upstream-channel signal. The resultant signal is transmitted to the base station 1 via an antenna 24. At this time, both the elements $w_1$ and $w_2$ of the weight vector w need not be transmitted to the base station 1. When one of the elements is normalized ($w_1$=1), the other element ($w_2$) alone is transmitted.
In the base station 1, a feedback information extracting unit 13 extracts the weight coefficient $w_2$ (with $w_1$=1) received from the mobile station 2 via an antenna 17. An amplitude/phase control unit 12 instructs a multiplier 15 to multiply a transmission data signal to be transmitted via the transmitting antenna 16-2 by the extracted weight coefficient $w_2$. Consequently, a transmission data signal, whose amplitude and phase are corrected at a transmitting side in order to compensate for degradations that may be detected at a receiving side, is transmitted via the transmitting antennas 16-1 and 16-2.

Incidentally, the WCDMA supports two modes of a mode 1 in which the weight coefficient $w_2$ is quantized to data of one bit long and a mode 2 in which the weight coefficient $w_2$ is quantized to data of four bits long. In the mode 1, feedback information of 1 bit long is transmitted during every slot for the purpose of feedback control. Therefore, although a control speed is high, since quantization is rough, feedback control cannot be achieved accurately. On the other hand, in the mode 2, 4-bit information is used for feedback control. Therefore, feedback control is achieved highly precisely. However, as one bit is transmitted during each slot, four slots are required for transmitting feedback information of one word long. Therefore, if fading occurs at a high frequency, the fading cannot be compensated for. Consequently, a characteristic of a system deteriorates. If a transmission rate at which an upstream-channel signal carrying feedback information is transmitted is limited, control precision, and a speed at which fading is compensated for, must be traded off.

A WCDMA Release-99 standard does not take account of a case where the number of transmitting antennas is larger than 2, because the standard is intended to avoid deterioration in efficiency in transmission of a signal carrying feedback information over an upstream channel. However, if an increase in an amount of feedback information or a decrease in an updating rate is permitted, the number of transmitting antennas may be three or more. In particular, at present, research and development on a case where the number of transmitting antennas is four are under way in earnest.

If a closed-loop transmission diversity method is adapted to a base station included in a mobile cellular communication system, after signals transmitted via respective transmitting antennas undergo independent fading, the signals are ideally phased and synthesized while being received by a mobile station via an antenna. Consequently, the resultant signal enjoys not only a diversity gain dependent on the number of transmitting antennas but also an increase in the gain deriving from the synthesis. This results in better receiving characteristic of the system. Moreover, the number of users accommodated in one cell can be increased. Herein, "ideally" signifies a condition that no error occurs in transmission of feedback information, no control delay occurs, no error occurs in inferring the response to an impulse on a channel, and no error occurs in quantization of a control value. In reality, the characteristic of the system deteriorates, due to these factors, compared with the ideal characteristic.

However, when the number of transmitting antennas installed in a base station is increased and a closed-loop transmission diversity method is adopted, the problems described below occur.

(1) In order to produce a diversity gain dependent on the number of transmitting antennas, the spacing between adjoining antennas must be large enough to minimize the correlation in fading between signals on channels extending from the antennas. In a radio base station included in a mobile cellular communication system, the spacing between adjoining antennas must be set to a value equivalent to twenty wavelengths or so in order to minimize the correlation in fading. If a signal falls within a frequency band of 2 GHz, one wavelength is approximately 15 cm. The antennas must therefore be arranged with adjoining antennas spaced by approximately 3m. Therefore, if the number of transmitting antennas increases, a large area is required to install the antennas. If an attempt is made to install the antennas on the roof of a building, there may be difficulty in the installation. The diversity gain may be saturated with an increase in the number of transmitting antennas. Consideration should be taken into the fact that even if the number of transmitting antennas is increased, the diversity gain may not increase very largely.

(2) Moreover, when the number of transmitting antennas is increased, feedback information relevant to each transmitting antenna must be transmitted from a mobile station. This leads to an increase in an amount of information that should be fed back. The transmission diversity method may fail to compensate for fast fading, and a characteristic of the system may deteriorate.

(3) Furthermore, in order to ensure sufficient precision in inferring the response to an impulse on a channel required to produce feedback information, the transmission power with which pilot signals are transmitted via respective transmitting antennas must be sufficiently high. However, the total transmission power with which the pilot signals are transmitted via all the transmitting antennas increases with an increase in the number of transmitting antennas. Consequently, if data signal and control signals become no longer orthogonal to each other because of multipath transmission, a degree of interference, to which pilot signals interfere with the data signal, increases. On the other hand, the total transmission power with which all the pilot signals are transmitted may be held constant irrespective of the number of transmitting antennas in order to stabilize the effect of the interference. In this case, the transmission power used to transmit a pilot signal via one transmitting antenna decreases with an increase in the number of transmitting antennas. This leads to degraded precision in inferring the response to an impulse on a channel.

(4) Furthermore, in order to ensure sufficient precision for inference of the response to an impulse on a channel required to produce feedback information, a calibration technology will prove useful in correcting a difference or time-sequential deterioration in a characteristic of a circuit realizing each antenna, that is, a deviation in the phase or amplitude of a signal caused by each antenna. Depending on the configuration of a base station, a device for performing the calibration must be additionally included for each antenna. This results in an increase in the scale of circuitry. In this case, calibration to be performed is no longer simple and efficient.

SUMMARY OF THE INVENTION

Accordingly, an object of the present invention is to provide a transmission diversity communication system in which even when the number of transmitting antennas is increased, only a small area is needed to install the antennas in a base station. Moreover, an increase in the total transmission power used to transmit all pilot signals is suppressed. Degradation in precision in inferring the response to an impulse on a channel extending from each antenna is prevented. Moreover, an increase in an amount of upstream feedback information to be transmitted from a mobile station is suppressed. Even when fading occurs at a high frequency, deterioration in a characteristic of the transmission diversity communication system is limited. In particular, an object of the present invention is to provide a transmission diversity communication system that can readily and efficiently perform calibration on each antenna of a base station for the purpose of further improving precision in inferring the response to an impulse on a channel. Moreover, a special calibration device or circuit need not be disposed in the base station.

According to the present invention, there is provided a mobile communication system in which a transmission diversity method is implemented. Herein, a base station transmits pilot signals, which are used in common among a plurality of mobile stations, via a plurality of antennas. Each of the mobile stations feeds back phase control information, based on which the phase of a signal is controlled for the transmissions via the plurality of antennas in the base station so that the phase of the signal will approach the phases of received pilot signals, to the base station. The base station transmits the common pilot signal via a reference antenna included in the plurality of the antennas. The base station alternately transmits the common pilot signal via the antennas other than the reference antenna. The mobile station receives the common pilot signal that is transmitted via the reference antenna, and also receives the pilot signal alternately transmitted via the antennas other than the reference antenna. The mobile station calculates phase control information based on which the phase of the signal is controlled for the transmission via each of the antennas other than the reference antenna.

Moreover, the base station may include as the plurality of antennas a reference antenna, a high-correlation antenna that causes a signal to highly correlate with a signal transmitted via the reference antenna in terms of fading, and a low-correlation antenna that causes a signal to hardly correlate with a signal transmitted via the reference antenna in terms of fading. The common pilot signal is transmitted via the reference antenna. The common pilot signal is alternately transmitted via the high-correlation antenna and low-correlation antenna so that the transmission frequency at which the common pilot signal is transmitted via the high-correlation antenna will be low, and the transmission frequency at which the common pilot signal is transmitted via the low-correlation antenna will be high. Moreover, the mobile station calculates phase control information, based on which the phase of a signal is controlled for the transmission via the low-correlation antenna, using the common pilot signal transmitted via the reference antenna and the common pilot signal transmitted at a high frequency via the low-correlation antenna. The mobile station then feeds back the calculated information to the base station at a high frequency.

Furthermore, the base station may include as the plurality of antennas a reference antenna and antennas other than the reference antenna. The common pilot signal is transmitted via the reference antenna, and the common pilot signal is transmitted via the plurality of antennas other than the reference antenna at a frequency corresponding to a frequency at which the mobile station feeds back the phase control information.

According to the present invention, there is provided a base station included in a mobile communication system in which a transmission diversity method is implemented. In the mobile communication system, the base station transmits pilot signals, which are used in common among a plurality of mobile stations, via a plurality of antennas. Each of the mobile stations feeds back phase control information, based on which the phase of a signal is controlled for the transmissions via the plurality of antennas in the base station so that the phase of the signal will approach the phases of received common pilot signals, to the base station. Herein, the plurality of antennas includes a reference antenna and a plurality of antennas other than the reference antenna. The base station includes a transmitting means that transmits the common pilot signal via the reference antenna and alternately transmits the common pilot signal via the other antennas.

Moreover, the base station may include, as the plurality of antennas, a reference antenna, a high-correlation antenna that causes a signal to highly correlate with a signal transmitted via the reference antenna in terms of fading, and a low-correlation antenna that causes a signal to hardly correlate with the signal transmitted via the reference antenna in terms of fading. The base station may include a transmitting means that transmits the common pilot signal via the reference antenna, and alternately transmits the common pilot signal via the high-correlation antenna and low-correlation antenna so that the transmission frequency at which the common pilot signal is transmitted via the high-correlation antenna will be low and the transmission frequency at which the common pilot signal is transmitted via the low-correlation antenna will be high.

Moreover, the base station may further include a phase control means that controls the phase of a signal for the transmission via the high-correlation antenna on the basis of the phase control information received at a low frequency from the mobile station, and that controls the phase of the signal for the transmission via the low-correlation antenna on the basis of the phase control information received at a high frequency from the mobile station.

Furthermore, the base station may include, as the plurality of antennas, a reference antenna and a plurality of antennas other than the reference antenna. The base station may include a transmitting means that transmits a common pilot signal via the reference antenna, and that transmits a common pilot signal via the plurality of antennas other than the reference antenna at a frequency corresponding to a frequency at which the mobile station feeds back the phase control information.

Furthermore, according to the present invention, there is provided a mobile station included in a mobile communication system in which a transmission diversity method is implemented. In the mobile communication system, a base station transmits pilot signals, which are used in common among a plurality of mobile stations, via a plurality of antennas. Each of the mobile stations feeds back phase control information, based on which the phase of a signal is controlled for the transmissions via the plurality of antennas in the base station so that the phase of the signal will approach the phases of received common pilot signals, to the base station. Herein, the plurality of antennas includes a reference antenna and a plurality of antennas other than the reference antenna. The mobile station includes: a receiving means that receives the common pilot signal transmitted via the reference antenna, and also receives the common pilot signal alternately transmitted via the antennas other than the reference antenna; and a phase control means that calculates phase control information, based on which the phase of a signal is controlled for the transmission via each of the antennas other than the reference antenna, using the common pilot signals received by the receiving means.

Every time the common pilot signal transmitted via the reference antenna and the common pilot signal alternately transmitted via the antennas other than the reference antenna are received, the phase control means calculates phase control information based on which the phase of a signal is controlled for the transmissions via the antennas other than the reference antenna.

Moreover, when the plurality of antennas includes a reference antenna, a high-correlation antenna that causes a signal to highly correlate with a signal transmitted via the reference antenna in terms of fading, and a low-correlation antenna that causes a signal to hardly correlate with the signal transmitted via the reference antenna in terms of fading, the mobile station may include: a receiving means that receives the common pilot signal transmitted via the reference antenna, and also receives the common pilot signals transmitted at a low frequency via the high-correlation antenna; and a phase control means that calculates phase control information, based on which the phase of a signal is controlled for the transmission via the high-correlation antenna, using the common pilot signal transmitted via the reference antenna and the common pilot signal transmitted at a low frequency via the high-correlation antenna, and that also calculates phase control information, based on which the phase of the signal is controlled for the transmission via the low-correlation antenna, using the common pilot signal transmitted via the reference antenna and the common pilot signal transmitted at a high frequency via the low-correlation antenna.

BRIEF DESCRIPTION OF THE DRAWINGS

Fig. 1 shows an example of a conventional configuration in which a closed-loop transmission diversity method employing two transmitting antennas is implemented;
Fig. 2 shows a first embodiment of a closed-loop diversity communication system in accordance with the present invention;
Fig. 3 shows an example of an arrangement of transmitting antennas in a base station shown in Fig. 2;
Fig. 4 shows an example of an arrangement of transmitting antennas in a base station included in a second embodiment of the closed-loop diversity communication system in accordance with the present invention;
Fig. 5 shows the basic configuration of the closed-loop diversity communication system in accordance with the present invention;
Fig. 6 shows an example of an arrangement of transmitting antennas in a base station shown in Fig. 5;
Fig. 7 shows a concrete example of the closed-loop diversity communication system shown in Fig. 5; and
Fig. 8A to Fig. 8C are tables indicating a sequence of switching common pilot signals in the closed-loop diversity communication system shown in Fig. 7 and a sequence of transmitting feedback information.

DESCRIPTION OF THE PREFERRED EMBODIMENTS

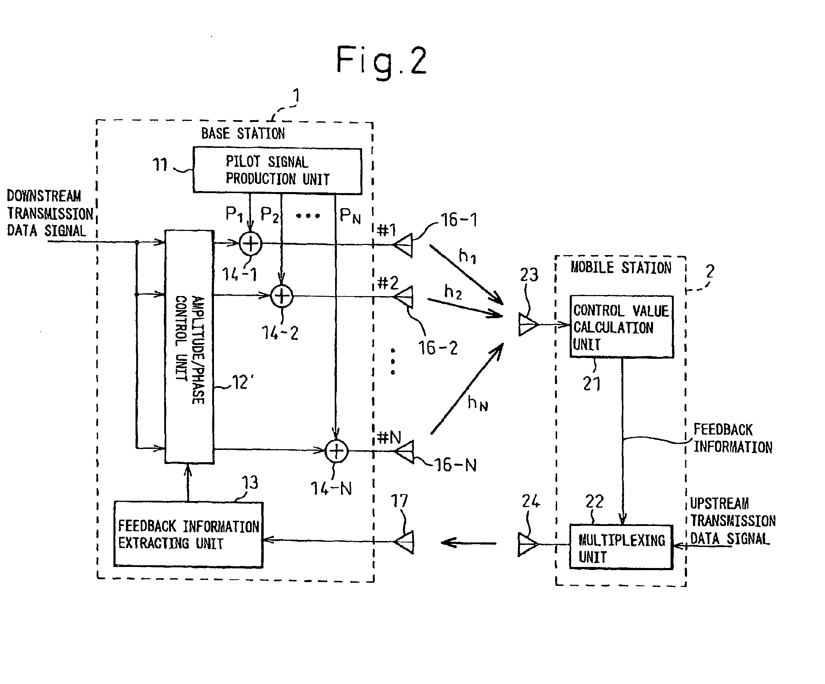

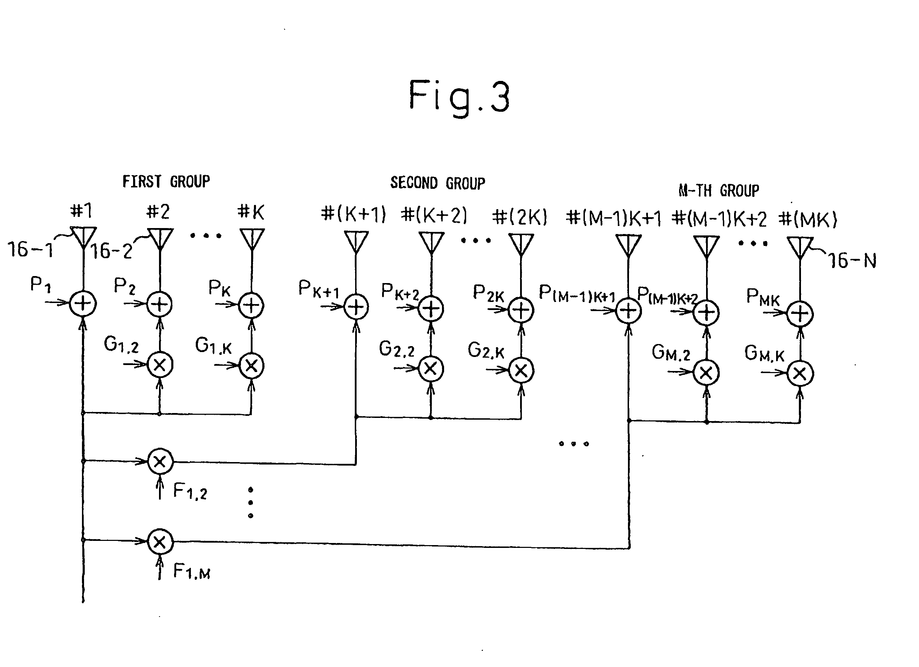

Fig. 2 shows a first embodiment of a closed-loop diversity communication system in accordance with the present invention. Moreover, Fig. 3 shows an example of an arrangement of transmitting antennas in a base station shown in Fig. 2. The first embodiment has solved the aforesaid problems (1) and (2).

Referring to Fig. 2, the number of transmitting antennas installed in a base station 1 is increased to be more than three, that is, N transmitting antennas 16-1 to 16-N are installed in the base station 1. In the present embodiment, a pilot signal production unit 11 produces N pilot signals $P_1(t)$, $P_2(t)$, etc., and $P_N(t)$ that are orthogonal to one another. Adders 14-1 to 14-N add the respective pilot signals to the same transmission data signal. The resultant signals are transmitted via the different transmitting antennas 16-1 to 16-N. The pilot signals are affected by the variation of the amplitude or phase of a data signal caused by fading. A mobile station 2 receives a synthetic signal of the signals via a receiving antenna 23.

A control value calculation unit 21 included in the mobile station 2 calculates the degree of correlation to which the received pilot signal correlates with each of the signals $P_1(t)$, $P_2(t)$, etc., and $P_N(t)$ so as to infer channel impulse response vectors $h_1$, $h_2$, etc., and $h_N$ that indicate the responses to the impulses of the pilot signals on respective channels. Thereafter, the channel impulse response vectors are used to calculate amplitude/phase control vectors (weight vectors) $w=[w_1, w_2$, etc., and $w_N]$ based on which the amplitude and phase of a data signal are controlled for the transmissions via the transmitting antennas 16-1 to 16-N in the base station 1 and which maximum power P provided as the expression (4). The resultant amplitude/phase control vectors are quantized. A multiplexing unit 22 multiplexes feedback information, which results from the quantization, with an upstream-channel signal, and transmits the resultant signal to the base station 1. Even in this case, only the amplitude/phase control vectors $w_2$, $w_3$, etc., and $w_N$ calculated with the amplitude/phase control vector $w_1$ normalized to unity ($w_1=1$) are transmitted.

$$P = w^H H^H Hw \tag{4}$$

$$H = [h_1, h_2,..., h_N] \tag{5}$$

where $h_1$ denotes the channel impulse response vectors indicating the responses to impulses on channels extending from transmitting antennas i. Assuming that the length of an impulse response is L, $h_i$ is expressed as follows:

$$h_i = [h_{i1}, h_{i2}, ..., h_{iL}] \tag{6}$$

The above description is based on the description made in conjunction with Fig. 1 showing the conventional system including two antennas, wherein the number of antennas is increased to be N. However, in the first embodiment of the present invention, coefficients determining vectors are, unlike they conventionally are, not calculated and fed back at regular intervals, but are calculated and fed back at different intervals. Therefore, in the base station 1, N transmitting antennas are divided into a plurality of groups (M groups) each including a plurality of (K) antennas. The (K) transmitting antennas belonging to the same group are disposed mutually closely so that they will cause signals to correlate with one another in terms of fading. On the other hand, the M groups of antennas are separated from one another so that they will cause signals to hardly correlate with one another in terms of fading.

In the mobile station 2, inter-antenna group control values ($F_{1,2}$ to $F_{1,N}$) are calculated at shorter intervals than intra-antenna group control values ($G_{1,2}$ to $G_{1,K}$, etc., and $G_{M,2}$ to $G_{M,K}$) are. The calculated control values are transmitted as feedback information to the base station. Herein, one antenna included in each group of antennas (1, (K+1), etc., or (M-1)K+1) is regarded as a reference antenna. The intra-antenna group control values ($G_{1,2}$ to $G_{1,K}$, etc., and $G_{M,2}$ to $G_{M,K}$) except a control value to be applied to the transmission via the reference antenna are adjusted relative to the control value to be applied to the transmission via the reference antenna.

Signals transmitted via the transmitting antennas belonging to different groups in the base station hardly correlate with one another in terms of fading. The signals independently undergo fading and reach the receiving antenna 23 of the mobile station. Consequently, the inferred responses to impulses of signals, which are transmitted via the reference antennas belonging to the different groups, on channels quickly vary due to the independent fading or variations in intensity. Herein, the control values to be applied to the transmissions via the reference antennas belonging to groups other than a certain group of antennas shall be adjusted relative to the control value to be applied to the transmission via the reference antenna belonging to the certain group. The adjusted control values shall be defined as the inter-antenna group control values. In the present embodiment, the control value to be applied to the transmission via the reference antenna 1 belonging to the first group is normalized. The control values to be applied to the transmissions via the reference antennas ((K+1), etc., and (M-1)K+1) belonging to the other groups, that is, the second to M-th groups are adjusted relative to the normalized control value. The adjusted control values shall be defined as the inter-antenna group control values ($F_{1,2}$ to $F_{1,M}$). The inter-antenna group control values ($F_{1,2}$ to $F_{1,M}$) quickly and mutually independently vary along with fading or variations in intensity. Therefore, for accurate control, a data signal must be controlled at shorter intervals.

On the other hand, signals transmitted via the transmitting antennas belonging to the same group in the base station highly correlate with one another in terms of fading. The signals undergo fading to nearly the same degree, but reach the receiving antenna 23 in the mobile station 2 while having a phase difference proportional to the angle of the mobile station 2 dependent on the base station 1. Consequently, the inferred responses to impulses of signals on channels extending from the transmitting antennas belonging to the same group have the phase difference dependent on the angle of the mobile station 2 relative to the base station 1. The inferred responses vary along with the movement of the mobile station 2, and the variation is slower than fading or variations in intensity. In the present embodiment, one antenna included in each group of antennas is regarded as a reference antenna (1, (K+1), etc., or (M-1)K+1). Control values ($G_{1,2}$ to $G_{1,K}$, etc., and $G_{M,2}$ to $G_{M,K}$) to be applied to the transmissions via respective antennas other than the reference antenna are adjusted relative to a control value to be applied to the transmission via the reference antenna. The adjusted control values to be applied to the transmissions via the respective antennas belonging to the same group ($G_{1,2}$ to $G_{1,K}$, etc., and $G_{M,2}$ to $G_{M,K}$) vary slowly along with the movement of the mobile station. Consequently, the cycle of controlling the data signal can be made relatively long.

The inter-antenna group control values $F_{1,m}$ and the intra-antenna group control values $G_{m,k}$ which are shown in Fig. 3 are calculated according to the expressions (7) and (8) below. Herein, M denotes the number of groups of antennas, K=N/M denotes the number of antennas belonging to each group, and * denotes conjugate complex numbers.

- Overall reference antenna: antenna 1
- Reference antenna of each group: antenna ((m-1)K+1) (where m denotes 1, etc., or M)

$$F_{1,m} = \frac{W_{(m-1)K+1}}{W_1^*} \ (m = 2, \ldots , M \tag{7}$$

$$G_{m,k} = \frac{W_{(m-1)K+k}}{W_{(m-1)K+1}^*} \ (m = 1,\ldots, M, k = 2,\ldots, K) \tag{8}$$

According to the first embodiment of the present invention, transmitting antennas are divided into groups. The spacing between adjoining ones of the groups of antennas must be set to a value equivalent to 20 wavelengths in order to minimize the correlation in fading between signals to be transmitted via the adjoining groups of antennas. On the other hand, the spacing between adjoining ones of antennas belonging to the same group is set to a value equivalent to about one wavelength in order to intensify the correlation in fading between signals to be transmitted via the adjoining ones. This has the merit that the area of a place in a base station where antennas are installed may be small.

Moreover, as the differences among the variation rates at which control information varies are utilized, an amount of feedback information can be reduced without deterioration of performance. Namely, the inter-antenna group control values ($F_{1,2}$ to $F_{1,M}$) are updated at short intervals because they vary quickly. Therefore, feedback must be performed frequently. In contrast, the intra-antenna group control values ($G_{1,2}$ to $G_{1,k}$, etc., or $G_{M,2}$ to $G_{M,K}$) are updated at longer intervals because they vary slowly. Therefore, feedback may be performed infrequently. Moreover, feedback information may be reduced as described below.

To begin with, the intra-antenna group control values depend on the angle of the mobile station 2 relative to the base station 1. Therefore, as far as a macro-cell system in which the radius of each cell is relatively large is concerned, a difference in the angle is negligible. Therefore, the intra-antenna group control values to be applied to the transmissions via a certain group of antennas (for example, control values $G_{1,2}$ to $G_{1,K}$ to be applied to the transmissions via the first group of antennas) may be adopted as control values to be applied to the transmissions via antennas belonging to other group (control values $G_{2,2}$ to $G_{2,K}$, etc., or $G_{M,2}$ to $G_{M,K}$ to be applied to the transmissions via antennas belonging to the second to M-th groups). In other words, only pieces of control information to be applied to the transmissions via antennas belonging to a certain one group may be transmitted, and the copies of the pieces of control information may be used to control a data signal for the transmissions via the other groups of antennas. This results in a reduced amount of feedback information.

Assume that the number of antennas K belonging to the m-th group is larger than 2. In this case, when phase differences of the responses to impulses on channels extending from antennas, which belong to one group, other than a reference antenna from the response to an impulse on a channel extending from the reference antenna (m-1)K+1 are compared with one another, the phase differences depend on the distances of the antennas belonging to the same group from the reference antenna. Consequently, when a control value $G_{m,2}$ to be applied to the transmission via an antenna adjoining a reference antenna (m-1)K+1 and belonging to the same group as the reference antenna, and a distance between adjoining ones of the antennas belonging to the same group are obtained, control values $G_{m,k}$ (where k denotes, 3, etc., or K) to be applied to the transmission via the antennas belonging to the same group can be worked out through calculation. Therefore, what should be transmitted as feedback information includes the control values $F_{1,m}$ (where m denotes 2, etc., or M) to be applied to the transmissions via all the respective reference antennas belonging to different groups, and the intra-antenna group control values $G_{1,2}$ to be applied to the transmissions via a specific group of antennas. In the present embodiment, the control values $F_{1,2}$ to $F_{1,M}$ to be applied to the transmissions via all the respective reference antennas belonging to different groups that are adjusted relative to the control value to be applied to the transmission via the reference antenna 1 belonging to the first group, and the control value $G_{1,2}$ to be applied to the transmission via an antenna 2 adjoining the reference antenna 1 of the first group are transmitted as feedback information.

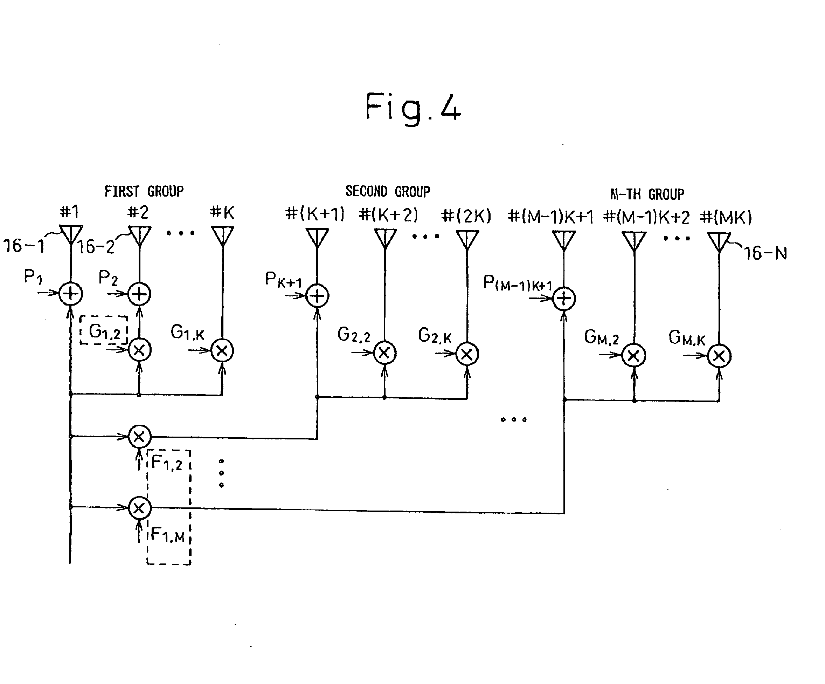

Fig. 4 shows an example of an arrangement of transmitting antennas in a base station employed in a second embodiment of the closed-loop diversity communication system in accordance with the present invention. The second embodiment has solved the aforesaid problem (3). Incidentally, the configuration of the second embodiment is identical to that shown in Fig. 2.

Referring to Fig. 4, the base station 1 transmits only common pilot signals that are needed to produce feedback information in the mobile station 2. This leads to a decrease in the number of transmitted common pilot signals. According to the present embodiment, the base station 1 transmits only pilot signals $P_1$, $P_{K+1}$, etc., and $P_{(M-1)K+1}$, and $P_2$, which are needed to acquire feedback information (indicated with a dashed line in Fig. 4), to the mobile station 2. The feedback information contains the control values $F_{1,2}$ to $F_{1,M}$ that are applied to the transmissions via all the respective reference antennas belonging to different groups and that are adjusted relative to the control value to be applied to the transmission via the reference antenna 1 of the first group, and the control value $G_{1,2}$ to be applied to the transmission via the antenna 2 adjoining the reference antenna 1 of the first group. Consequently, even when the number of transmitting antennas is increased, power used to transmit a common pilot signal $P_{(m-1)K+1}$ (where m denotes 1, etc., or M) to be transmitted via the reference antenna belonging to an added group of antennas is merely added. Therefore, an increase in total transmission power is moderate.

When the total transmission power used to transmit all common pilot signals is held constant irrespective of the number of transmitting antennas, a decrease in the transmission power used to transmit each common pilot signal $P_{(m-1)K+1}$ (where m denotes 1, etc., or M) is of the level of power used to transmit common pilot signals via an added group of antennas. Therefore, degradation in precision in inferring the response to an impulse on each channel is moderate.

As mentioned above, according to the second embodiment of the present invention, when the number of transmitting antennas in the base station 1 is increased, if transmission power used to transmit a common pilot signal via one transmitting antenna is held constant, an increase in total transmission power used to transmit all common pilot signals is moderate. A degree of interference to which common pilot signals interfere with a data signal in a multipath environment can be minimized. On the other hand, when the total transmission power used to transmit all common pilot signals is held constant in the base station 1, a decrease in transmission power used to transmit a common pilot signal via one transmitting antenna is moderate. Degradation in precision in inferring the response to an impulse on each channel can be avoided.

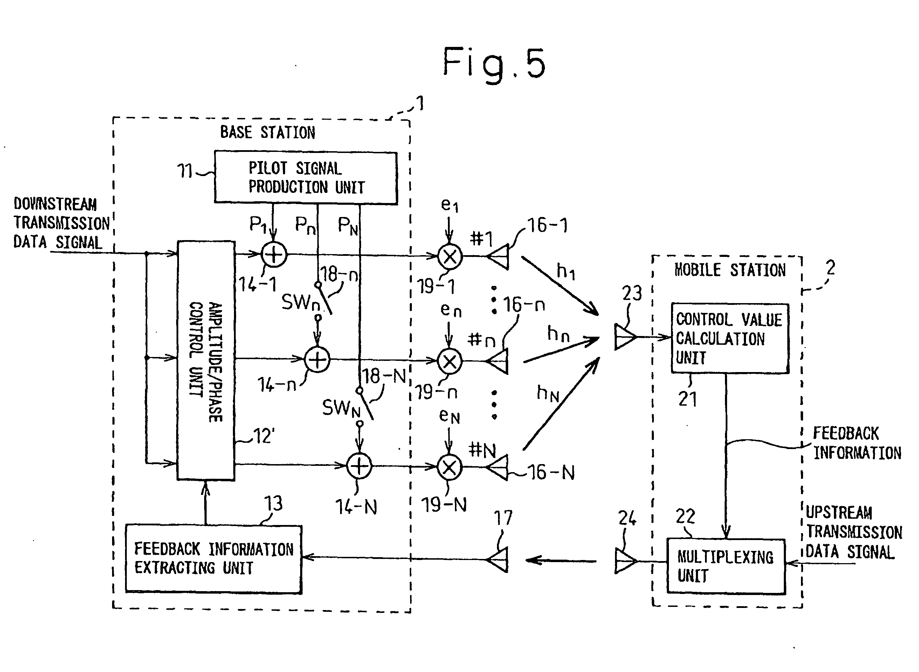

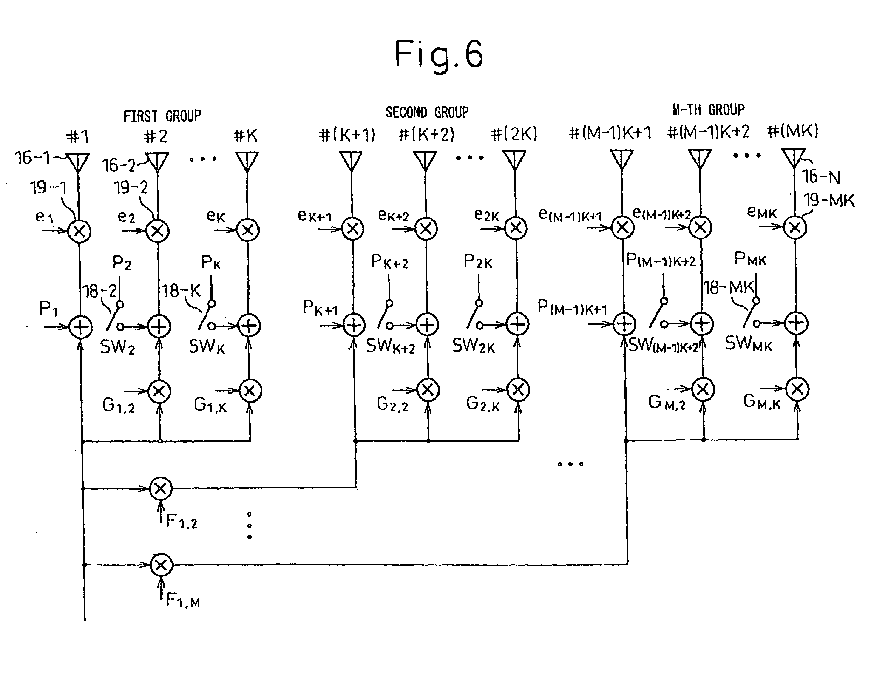

Fig. 5 shows the basic configuration of the closed-loop diversity communication system in accordance with the present invention. Fig. 6 shows an example of an arrangement of transmitting antennas in a base station employed in the basic configuration of the closed-loop diversity communication system in accordance with the present invention. The basic configuration encompasses the configurations of the first and second embodiments of the present invention. According to the present invention, the problem (4), as well as the problems (1) to (3), is solved.

As described so far, according to the first embodiment of the present invention, when the number of transmitting antennas in the base station 1 is increased, an amount of feedback information to be produced by the mobile station 2 is reduced. According to the second embodiment of the present invention, the base station 1 transmits only common pilot signals required to produce the reduced amount of feedback information. The technique of using control values, which are applied to the transmissions via certain antennas, as control values to be applied to the transmissions via other antennas is adopted in order to reduce an amount of information and an amount of power. The technique ideally works when the transmitting antennas 16-1 to 16-N installed in the base station 1 all exhibit the same circuit parameters.

In other words, on the assumption that a calibration technology is separately adapted and all transmitting antennas exhibit the same circuit parameters, the method implemented in the first or second embodiment of the present invention may be adopted. Namely, the control values $G_{1,k}$ (where k denotes 2, etc., or K) to be applied to the transmissions via respective antennas belonging to a certain specific group in the base station 1, and the control values $F_{1,m}$ (where m denotes 2, etc., or M) to be applied to the transmissions via the respective reference antennas belonging to all groups of antennas may be calculated using the inferred responses to impulses of common pilot signals on channels. The control values to be applied to the transmissions via the respective antennas belonging to the specific group are used as control values to be applied to the transmissions via respective antennas belonging to groups other than the specific group.

In reality, antennas are independent circuits. Circuit parameters are different among the antennas, that is, the phases or amplitudes of signals transmitted via the antennas deviate from one another. Consequently, the above technique will prove effective only when the calibration technology for correcting the deviations of the phase or amplitude of a signal caused by the respective antennas is adapted. If the calibration technology is not adapted, control signals to be applied to the transmissions via respective antennas must be calculated from the inferred responses to impulses of common pilot signals on channels.

The principles of the closed-loop transmission diversity method are such that: the mobile station 2 correlates a received pilot signal with known pilot signals so as to infer the responses to impulses on channels extending from the respective transmitting antennas 16-1 to 16-N to the mobile station 2; and the inferred impulse responses are used to control the phase or amplitude of a data signal for the transmissions via the respective transmitting antennas 16-1 to 16-N. The inferred impulse responses are equivalent to outputs produced by impressing the deviations of the phase or amplitude of a data signal, which are caused by respective transmitting antennas, on the actual responses to impulses on channels. Fundamentally, controlling the phase or amplitude of a data signal for production of a synthetic signal based on the diversity method, and correcting the deviation of the phase or amplitude of a signal for calibration are integrated into the closed-loop transmission diversity method. Consequently, a device for performing calibration need not be included additionally.

However, when the second embodiment of the present invention shown in Fig. 4 is adapted, pilot signals to be transmitted include common pilot signals $P_1$, $P_{K+1}$, etc., and $P_{(M-1)K+1}$, which are transmitted via the reference antennas belonging to respective groups, and a common pilot signal $P_2$ transmitted via an antenna adjoining the reference antenna of the first group of antennas. Consequently, the characteristics of antennas to be calibrated according to the fundamental closed-loop transmission diversity method are limited to the reference antennas 1, (K+1), etc., and (M-1)K+1 belonging to respective groups and the antenna 2. Consequently, when the second embodiment of the present invention is actually adapted, a calibration circuit must be added for each of the other antennas. This leads to an increase in the scale of circuitry.

The basic configuration of the present invention shown in Fig. 5 solves the above problem. Referring to Fig. 5, switches $SW_n$ to $SW_N$ 18-n to 18-N and multipliers 19-1 and 19-n to 19-N are added to the base station 1 included in the configuration shown in Fig. 2. As shown in Fig. 6, transmitting antennas installed in the base station 1 are divided into a plurality of groups each including a plurality of antennas. The transmitting antennas belonging to each group are disposed mutually closely so that the signals to be transmitted via the antennas will highly correlate to one another in terms of fading. Herein, N denotes the number of transmitting antennas, M denotes the number of groups of antennas, and K=N/M denotes the number of antennas belonging to each group.

The switches $SW_{(m-1)K+k}$ (where k denotes 2, etc., or K) associated with each group m of antennas (where m denotes 1, etc., or M) switch transmission and non-transmission of common pilot signals via antennas other than the reference antenna of each group. For example, when one of the switches 18-2 to 18-K associated with the first group is made, an associated one of the common pilot signals $P_2$ to $P_K$ is transmitted via an associated one of the antennas 2 to K other than the reference antenna 1. In the present embodiment, a common pilot signal is transmitted via the reference antenna of each group. On the other hand, the switches 18-2 to 18-MK are made or broken so that a common pilot signal will be transmitted once during a certain time interval via an associated one of antennas other than the reference antenna of each group. The common pilot signal is transmitted once during the certain time interval because the deviation of the phase or amplitude of a data signal caused by each antenna varies very slowly, independently, and time-sequentially.

Consequently, the characteristics of all antennas can be calibrated during the certain time interval according to the fundamental closed-loop transmission diversity method. Moreover, the deviations ($e_1$ to $e_{MK}$) of the phase or amplitude of a signal caused by the respective antennas are corrected by the multipliers 19-1 to 19-MK associated with the antennas. At this time, the inter-antenna group control values $F_{1,m}$ (where m denotes 2, etc., or M) and the intra-antenna group control values $G_{m,k}$ (where m denotes 1, etc., or M, and k denotes 2, etc., or K) are used not only to control the phase or amplitude of a signal for production of a synthetic signal based on the diversity method but also to correct the deviations of the phase or amplitude of the signal caused by the respective antennas.

Next, a description will be made of a concrete procedure of transmitting common pilot signals, a concrete procedure according to which control values to be applied to the transmissions via respective antennas are calculated in a mobile station, and a concrete procedure of feeding back the control values from the mobile station to a base station. A subscript inter_group is appended to reference numerals that will be employed in relation to the transmissions via reference antennas belonging to respective groups. A subscript intra_group is appended to reference numerals that will be employed in relation to the transmissions via respective antennas belonging to the same group.

A common pilot signal $P_{(m-1)K+1}$ is transmitted via the reference antenna (m-1)K+1 of the m-th group (where m denotes 1, etc., or M) installed in the base station 1. Via the other antennas (m-1)K+2, etc., and mK, for example, one of common pilot signals $P_{(m-1)K+2}$, etc., and $P_{(mK)}$ is selected and transmitted. The common pilot signals are orthogonal to one another.

The pilot signals are affected by the variation of the amplitude or phase of a data signal caused by fading. A synthetic signal of the pilot signals is transmitted to the mobile station 2 via the receiving antenna 23. The control value calculation unit 21 included in the mobile station 2 correlates the components of the received pilot signal with the known pilot signals. Consequently, the channel impulse response vectors $h_1$, etc., and $h_{MK}$ indicating the responses to impulses on channels extending from the respective transmitting antennas 16-1 to 16-N in the base station 1 can be inferred.

The channel impulse response vectors are used to calculate amplitude/phase control vectors (weight vectors) $W_{inter\_group}=[w_1, w_{K-1}$, etc., and $w_{(M-1)K+1}]$ based on which the amplitude or phase of a signal is controlled for the transmissions via the respective reference transmitting antennas belonging to the respective groups and which maximize power $P_{inter\_group}$ provided by the expression (9) below. Even in this case, the control vector $w_1$ is normalized to unity. Moreover, amplitude/phase control vectors (weight vectors) $W_{intra\_group}=[w_{(m-1)K+1}, w_{(m-1)K+k}]$ based on which the amplitude or phase of the signal is controlled for the transmissions via respective transmitting antennas (m-1)K+k (where k denotes 2, etc., or K) other than the reference antenna belonging to, for example, the m-th group (where m denotes 1, etc., or M) and which maximize power $P_{intra\_group}$ provided as the expression (11) are calculated. For the control vector $w_{(m-1)K+1}$, a value calculated as one of the control vectors $W_{inter\_group}$ is adopted.

$$P_{inter\_group} = W_{inter\_group}^H \, H_{inter\_group}^H \, H_{inter\_group}^H \, W_{inter\_group} \quad (9) \tag{9}$$

$$H_{inter\_group} = [h_1, h_{K+1},..., h_{(M-1)K+1}] \tag{10}$$

$$P_{intra\_group} = W_{intra\_group}^H \, H_{intra\_group}^H \, H_{intra\_group} \, W_{intra\_group} \tag{11}$$

$$H_{intra\_group} = [h_{(m-1)K+1}, h_{(m-1)K+k}] \tag{12}$$

The thus calculated inter-antenna group weight vectors $W_{inter\_group}$, and the thus calculated intra-antenna group weight vectors $W_{intra\_group}$ are used to calculate the inter-antenna group control values $F_{1,m}$ (where m denotes 2, etc., or M) and the intra-antenna group control values $G_{m,k}$ (where m denotes 1, etc., or M, and k denotes 2, etc., or K) according to the following expressions:

$$F_{1,m} = \frac{W_{(m-1)K+1}}{W_1^*} \ (m = 2,..., M) \tag{13}$$

$$G_{m,k} = \frac{W_{(m-1)K+k}}{W_{(m-1)K+1}^*} \ (m = 1,..., M, k = 2,..., K) \tag{14}$$

The inter-antenna group control values $F_{1,m}$ are calculated based on the common pilot signals transmitted via the reference antennas of the respective groups at regular intervals. The intra-antenna group control values $G_{m,k}$ are calculated based on the common pilot signals transmitted via any antennas other than the reference antennas of the respective groups at regular intervals.

When the mobile station 2 feeds back the control values to the base station 1, the inter-antenna group control values $F_{1,m}$ are fed back at a high frequency in order to compensate for fast fading or fast variations in intensity and very slow variations in the deviations of the phase or amplitude of a signal caused by the respective transmitting antennas. The intra-antenna group control values $G_{m,k}$ are fed back at a relatively low frequency in order to compensate for a relatively slow variation in the angle of the mobile station 2 relative to the base station 1 and the very slow variations in the deviations of the phase or amplitude of the signal caused by the respective transmitting antennas. The base station 1 holds in a buffer the control values fed back previously. Every time new control values are fed back, the contents of the buffer are updated. The phase or amplitude of a signal carrying transmission data is controlled based on the control values $F_{1,m}$ and $G_{m,k}$ held in the buffer.

As mentioned above, a common pilot signal is transmitted at regular intervals via the reference antennas of the respective groups of antennas installed in the base station 1. A selected common pilot signal is transmitted via any of antennas other than the reference antenna of each group. Even if the number of transmitting antennas in the base station 1 is increased, the number of antennas via which a common pilot signal is transmitted can be restricted. Consequently, if transmission power used to transmit a common pilot signal via one transmitting antenna is held constant, an increase in total transmission power used to transmit all common pilot signals is moderate. A degree of interference to which the common pilot signals interfere with a data signal can be suppressed. Moreover, if the total transmission power used to transmit all common pilot signals is held constant, a decrease in transmission power used to transmit a common pilot signal via one transmitting antenna is moderate. Degradation in precision in inferring the response to an impulse on each channel can be suppressed. Furthermore, a special calibration circuit need not be included, but the deviations of the phase or amplitude of a signal caused by the transmitting antennas can be corrected.

Consequently, in the transmission diversity communication system having the basic configuration of the present invention, even if the number of transmitting antennas is increased, only a small area is needed to install the transmitting antennas in the base station. An increase in total transmission power used to transmit all common pilot signals is suppressed. Degradation in precision in inferring the responses to impulses on channels extending from the antennas is suppressed. Moreover, an increase in an amount of upstream feedback information to be produced by the mobile station is suppressed. Moreover, even if fading occurs at a high frequency, communication can be achieved according to a transmission diversity method with little deterioration in a characteristic of a system. Furthermore, calibration can be readily and efficiently performed on the antennas installed in the base station in order to further improve the precision in inferring the responses to impulses on channels. A special calibration device or circuit need not be included in the base station.

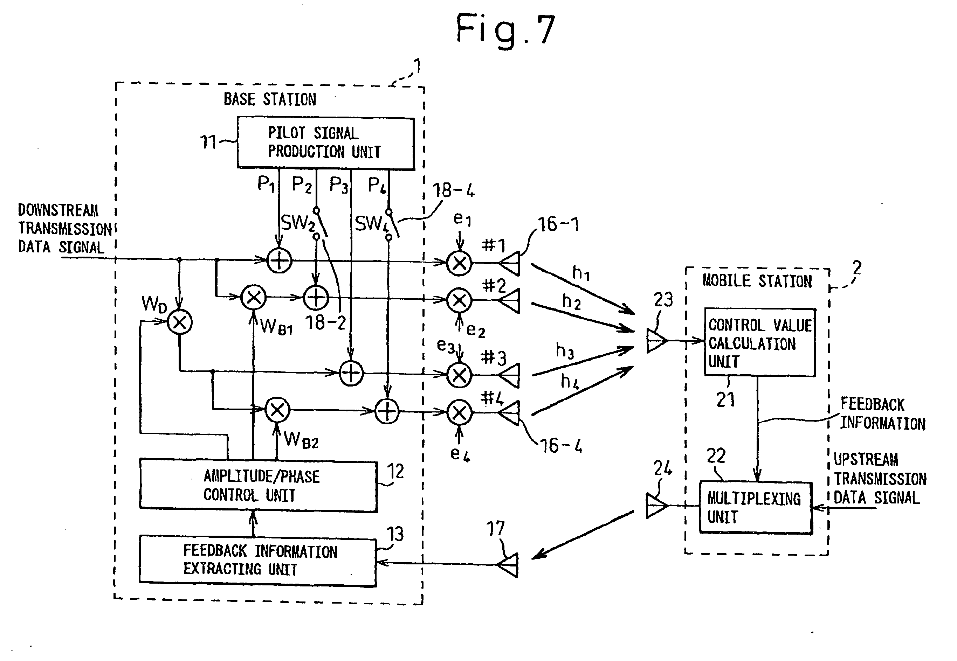

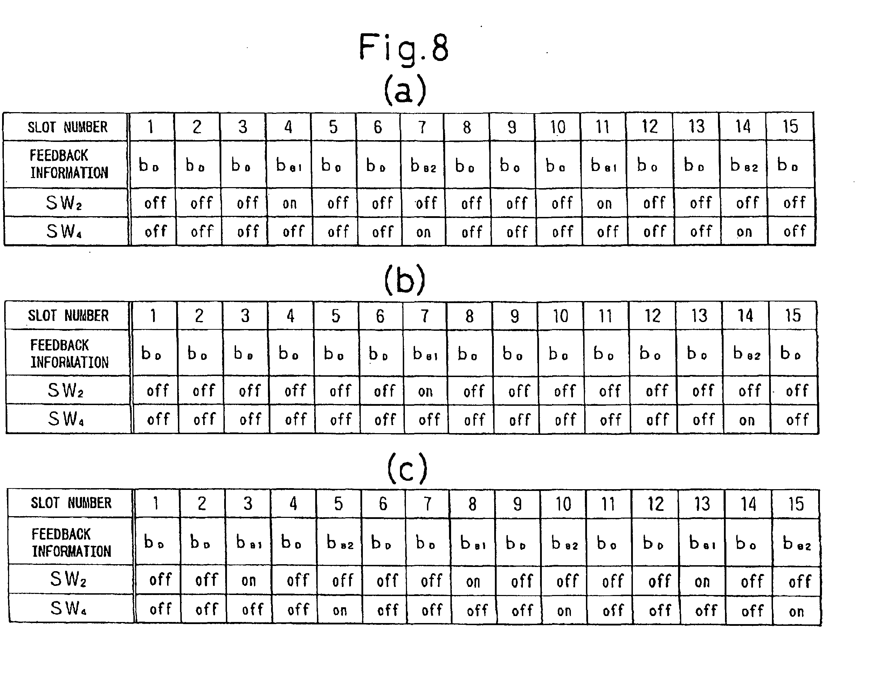

Fig. 7 and Fig. 8 show a concrete example of the configuration shown in Fig. 5. Fig. 7 shows a concrete example of the closed-loop diversity communication system in accordance with the present invention in which the number of antennas N is four and the number of groups of antennas M is 2. Moreover, Fig. 8 shows the relationship of a sequence of switching common pilot signals sent from the base station to a sequence for transmitting feedback information from the mobile station.

Referring to Fig. 7, the antennas 1 and 2 installed in the base station 1 shall belong to the first group, and the antennas 3 and 4 shall belong to the second group. Moreover, the antennas 1 and 3 shall be the reference antennas of the first and second groups respectively. The antennas 1 and 2 and the antennas 3 and 4 are separated from each other by a length equivalent to one wavelength so that signals to be transmitted via the antennas 1 and 2 or the antennas 3 and 4 will highly correlate with each other in terms of fading. The antennas 1 and 3 and the antennas 2 and 4 are separated from each other by a length equivalent to twenty wavelengths so that the signals to be transmitted via the antennas 1 and 3 or the antennas 2 and 4 will hardly correlate with each other in terms of fading.

Pulse trains $P_1$, $P_2$, $F_3$, and $P_4$ that are orthogonal to one another are adopted as common pilot signals. The common pilot signals $P_1$ and $P_3$ are transmitted via the reference antennas 1 and 3 belonging to the first and second groups of antennas at regular intervals. Via the other antennas 2 and 4, the common pilot signals $P_2$ and P, are transmitted or not transmitted according to the states of the switches $SW_2$ and $SW_4$ respectively. The common pilot signals $P_1$, $P_2$, $P_3$, and $P_4$ are affected by the deviations $e_1$, $e_2$, $e_3$, and $e_4$ of the phase or amplitude of a data signal caused by the transmitting antennas, and are also affected by the variation of the phase or amplitude thereof caused by fading. The resultant signals are synthesized, and the synthetic signal is transmitted to the mobile station 2 via the receiving antenna 23.

The control value calculation unit 21 included in the mobile station 2 correlates the received pilot signal with the known pilot signals $P_1$, $P_2$, $P_3$, and $P_4$ respectively, and averages the degrees of correlations. Thus, the responses $h_1$, $h_2$, $h_3$, and $h_4$ to impulses on channels extending from the transmitting antennas 1, 2, 3, and 4 installed in the base station 1 are inferred.

In relation to the present example, a method for controlling only the phase of a signal but not controlling the amplitude thereof will be described below. When $w_i = a_i e^{J\phi i}$ is established, $a_i$ is set to unity and only a phase $\phi_i$ is controlled. The control value $\phi_{B1}$ to be applied to the transmission via the antenna 2 that is adjusted relative to the control value to be applied to the transmission via the antenna 1, the control value $\phi_{B2}$ to be applied to the transmission via the antenna 4 that is adjusted relative to the control value to be applied to the transmission via the antenna 3, and the control value $\phi_D$ to be applied to transmission via the antenna 3 that is adjusted relative to the antenna 1 are quantized, and transmitted as feedback information to the base station. when the control values are quantized into data of one bit long, the bit is determined as follows:

$$\phi_i^Q = \begin{cases} 0 \ (-\dfrac{\pi}{2} < \phi_i^Q \le \dfrac{\pi}{2} \\ \pi \ (\dfrac{\pi}{2} < \phi_i^Q \le \dfrac{3\pi}{2}) \end{cases} \qquad (15)$$

When $\phi_i^Q=0$ is established, the feedback information $b_i$ is set to 0. when $\phi_i^Q=\pi$ is established, the feedback information $b_i$ is set to 1. The control values $\phi_{B1}$ and $\phi_{B2}$ depend on the direction of the mobile station relative to the base station as well as the deviations of the phase or amplitude of a signal caused by the respective transmitting antennas of the base station, and vary relatively slowly. On the other hand, the control value $\phi_D$ quickly varies along with fading or variations in intensity. Consequently, feedback information $b_D$ is multiplexed with a signal on an upstream channel so that it will be transmitted at a higher transmission rate than the pieces of feedback information $b_{B1}$ and $b_{B2}$, and then transmitted to the base station.

Fig. 8A to Fig. 8C show examples adopting a frame structure stipulated by the WCDMA technology (one 10 ms long frame comprises fifteen slots). The sequence of switching common pilot signals matches the sequence of transmitting feedback information. The switches $SW_2$ and $SW_4$ are made or broken in order to transmit common pilot signals, which are needed to calculate feedback information in the mobile station, from the base station to the mobile station. In Fig. 8A, the switches $SW_2$ and $SW_4$ included in the base station 1 are alternately turned on during the fourth, seventh, eleventh, and fourteenth slots out of fifteen slots constituting one frame. The turning on is performed in response to a directive issued from an upper-level layer. Consequently, the feedback information $b_{B1}$, which is applied to the transmission via the antenna 2, out of all the pieces of feedback information sent from the mobile station 2 is multiplexed with other signal during the fourth and eleventh slots. The feedback information $b_{B2}$ to be applied to the transmission via.the antenna 4 is multiplexed with other signals during the seventh and fourteenth slots. The feedback information $b_D$ to be applied to the transmissions via the reference antennas 1 and 3 respectively is multiplexed with other signal during the first to third slots, fifth and sixth slots, eighth to tenth slots, and twelve, thirteenth, and fifteenth slots.

The feedback information extracting unit 13 included in the base station 1 samples received feedback information on an upstream channel. Based on the feedback information received during an immediately preceding slot, the amplitude/phase control unit 12 directly controls the weights $W_D$, $W_{B1}$, and $W_{B2}$ to be applied to the transmissions via the respective antennas. At this time, the amplitude/phase control unit 12 uses the temporally latest feedback information to control the transmissions via the other respective antennas. Owing to this control sequence, not only the phase or amplitude of a data signal is controlled for production of a synthetic signal, based on a diversity method, but also the deviations of the phase or amplitude thereof caused by the respective antennas are corrected.

Some variants of the aforesaid embodiments will be described below.

In the aforesaid embodiments, the mobile station 2 uses received common pilot signals to calculate control values that are applied to the transmissions via respective antennas. Other calculating technique that can be adopted even when no common pilot signals are transmitted is such that a user-specific pilot signal contained in a downward transmission data signal is used to calculate the control values that are applied to the transmissions via respective antennas. According to the WCDMA technology, on a downlink, the user-specific pilot signal is temporally multiplexed with a data signal and used to infer a signal-to-interference ratio (SIR) based on which transmission power is controlled or to infer the responses to impulses on channels that are used to combine signals in a rake receiver.

To begin with, a description will be made of the principle that the mobile station 2 calculates control values, which are applied to the transmissions via respective antennas, using common pilot signals. The components of a synthetic signal of common pilot signals transmitted via the antennas i (where i denotes 1, etc., or 4) are expressed as follows:

$$r_{CPICHi} = (P_{CPICHi}e_i) \ h_i \qquad (16)$$

The receiving side correlates the signal components with known common pilot signals according to the expression (17), and thus calculates the inferred responses to impulses on channels.

$$\Sigma(r_{CPICHi}P_{CPICHi}^*) \simeq e_i h_i \qquad (17)$$

The inferred impulse responses are equivalent to outputs produced by impressing the deviations of the phase or amplitude of a data signal, which are caused by the transmitting antennas in the base station 1, on the actual responses to impulses on channels. The inferred impulse responses are used to calculate the channel values to be applied to the transmissions via respective antennas. Consequently, not only the phase or amplitude of a data signal can be controlled for production of a synthetic signal based on a diversity method in the base station but also the deviations of the phase or amplitude thereof caused by the antennas can be corrected.

Next, a description will be made of the principle that the mobile station 2 calculates intra-antenna group control values using a user-specific pilot signal. The components of a synthetic signal produced by transmitting the user-specific pilot signal via the antennas 1, 2, 3, and 4 are expressed as follows:

$$r_{DPCCH1} = (P_{DPCCH1}e_1)h_1 \tag{18}$$

$$r_{DPCCH2} = (P_{DPCCH2}w_{B1}e_2)h_2 \tag{19}$$

$$r_{DPCCH3} = (P_{DPCCH3}w_De_3)h_3 \tag{20}$$

$$r_{DPCCH4} = (P_{DPCCH4}w_{B2}w_De_4)\,h_4 \tag{21}$$

The receiving side correlates the received signal components with the control values, which are applied to the transmissions via respective antennas and are immediately previously fed back, according to the expressions (22) to (25) below. Consequently, the inferred responses to impulses on channels are produced. The inferred impulse responses are equivalent to outputs produced by impressing the deviations of the phase or amplitude of a data signal, which are caused by the respective transmitting antennas in the base station, on the actual responses to impulses on channels.

$$\Sigma(r_{DPCCH1}P^*_{DPCCH1}) \simeq e_1h_1 \tag{22}$$

$$\Sigma(r_{DPCCH2}P^*_{DPCCH2}w^*_{B1}) \simeq e_2h_2 \tag{23}$$

$$\Sigma(r_{DPCCH3}P^*_{DPCCH3}w^*_O) \simeq e_3h_3 \tag{24}$$

$$\Sigma(r_{DPCCH4}P^*_{DPCCH4}w^*_{B2}w^*_D) \simeq e_4h_4 \tag{25}$$

In general, the user-specific pilot signal requires less transmission power than the common pilot signal does. Therefore, the controls values that are applied to the transmissions via respective antennas and that are calculated using the inferred responses to impulses on channels contain a relatively large error. However, the user-specific pilot signal is transmitted at regular intervals. Therefore, the precision in the intra-antenna group control values that vary relatively slowly can be improved by calculating the moving averages thereof. On the other hand, the precision in the inter-antenna group control values cannot be improved by calculating the moving averages thereof because they must compensate for fading or variations in intensity. Therefore, the inter-antenna group control values should be calculated using common pilot signals. When the user-specific pilot signal is adopted, the mobile station 2 uses the specific pilot signal to calculate the intra-antenna group control values. In this case, the common pilot signals $P_2$ and $P_4$ transmitted via the antennas 2 and 4 become unnecessary. Consequently, the base station 1 can hold the switches $SW_2$ and $SW_4$ shown in Fig. 7 in an off state all the time. Eventually, the total transmission power used to transmit all common pilot signals can be further reduced.

According to another variant, the mobile station 2 utilizes a user-specific pilot signal as described above. In addition, the common pilot signals $P_2$ and $P_4$ whose transmission requires large transmission power and which provide the inferred responses to impulses on channels that contain only a small error are transmitted as they are in the embodiment described in conjunction with Fig. 7. The intra-antenna group control values are then calculated using the user-specific pilot signal and the common pilot signals alike. Since the intra-antenna group control values vary relatively slowly, when the moving averages of the control values are calculated, the precision in the intra-antenna group control values can be further improved.

According to still another variant, the frequency at which common pilot signals are transmitted via respective antennas is not fixed unlike the example described in conjunction with Fig. 8A but is varied depending on a situation. For example, when the mobile station is moving fast, a change in the angle of the mobile station relative to the base station is not so abrupt (in a macro-cell environment) but fading or variations in intensity are more intense. Consequently, the inter-antenna group control values are fed back more frequently in order to compensate for the fading or variations. During the fourth and eleventh slots, although the transmissions via the antennas 2 and 4 are permitted in the example shown in Fig. 8A, the transmissions via the reference antennas 1 and 3 are permitted in the example shown in Fig. 8B. Moreover, if signals transmitted via antennas belonging to the same group light correlate with each other in terms of fading, the intra-antenna group control values also vary depending on fading. The intra-antenna group control values are therefore fed back more frequently. In the example shown in Fig. 8C, the number of slots within one frame during which the transmissions via the antennas 2 and 4 respectively are permitted is increased, that is, the transmissions via the antennas 2 and 4 respectively are permitted during the third, fifth, eighth, tenth, thirteenth, and fifteenth slots within one frame. Incidentally, the switching sequence to be employed is determined by an instruction issued from an upper-level layer.

As described so far, according to the present invention, the number of antennas via which common pilot signals needed to produce control information are transmitted is decreased. When the number of transmitting antennas in a base station is increased, if transmission power used to transmit a common pilot signal via one transmitting antenna is held constant, a degree of interference to which common pilot signals interfere with a data signal in a multipath environment is suppressed. If total transmission power used to transmit all common pilot signals is held constant, degradation in precision in inferring the responses to impulses on channels is suppressed. Furthermore, a special calibration circuit is not needed to correct the deviations of the phase or amplitude of the data signal caused by the transmitting antennas.

**Claims**

1. A mobile communication system in which a transmission diversity method is implemented and in which: a base station transmits pilot signals, which are used in common among a plurality of mobile stations, via a plurality of antennas; and a mobile station feeds back phase control information, based on which the phase of a signal is controlled for the transmissions via said plurality of antennas respectively installed in the base station so that the phase of the signal will approach the phases of received common pilot signals, to the base station, wherein:

   said base station transmits the common pilot signal via a reference antenna included in the plurality of antennas and, alternately, transmits the common pilot signal via a plurality of antennas other than said reference antenna; said mobile station receives the common pilot signal that is transmitted via said reference antenna, also receives the common pilot signal that is alternately transmitted via the plurality of antennas other than said reference antenna, and calculates pieces of phase control information that are applied to the transmissions via said plurality of antennas respectively other than said reference antenna.

2. A mobile communication system in which a transmission diversity method is implemented and in which: a base station transmits pilot signals, which are used in common among a plurality of mobile stations, via a plurality of antennas; and a mobile station feeds back phase control signals, based on which the phase of a signal is controlled for the transmissions via said plurality of antennas respectively installed in said base station so that the phase of the signal will approach the phases of received common pilot signals, to said base station, wherein:

   said base station includes as said plurality of antennas a reference antenna, a high-correlation antenna that causes a signal to highly correlate with a signal, which is transmitted via said reference antenna, in terms of fading, and a low-correlation antenna that causes a signal to hardly correlate with the signal, which is transmitted via said reference antenna, in terms of fading; said base station transmits the common pilot signal via said reference antenna, and alternately transmits the common pilot signal via said high-correlation antenna and said low-correlation antenna so that the transmission frequency at which the common pilot signal is transmitted via said high-correlation antenna will be low and the transmission frequency at which the common pilot signal is transmitted via said low-correlation antenna will be high; said mobile station calculates phase control information, based on which the phase of a signal is controlled for the transmission via said high-correlation antenna, using the common pilot signal that is transmitted via said reference antenna and the common pilot signal that is transmitted at a low frequency via said high-correlation antenna, and feeds back the phase control information to said base station at a low frequency; and said mobile station calculates phase control information, based on which the phase of the signal is controlled for the transmission via said low-correlation antenna, using the common pilot signal that is transmitted via said reference antenna and the common pilot signal that is transmitted at a high frequency via said low-correlation antenna, and feeds back the phase control information to said base station at a high frequency.

3. A mobile communication system in which a transmission diversity method is implemented and in which: a base station transmits pilot signals, which are used in common among a plurality of mobile stations, via a plurality of antennas; and a mobile station feeds back phase control signals, based on which the phase of a signal is controlled for the transmissions via said plurality of antennas respectively installed in said base station so that the phase of the signal will approach the phases of received common pilot signals, to said base station, wherein:

said base station includes as said plurality of antennas a reference antenna and a plurality of antennas other than said reference antenna, transmits the common pilot signal via said reference antenna, and transmits the common pilot signals via said plurality of antennas other than said reference antenna at a frequency corresponding to a frequency at which the phase control signals are fed back from the mobile station.

4. A base station included in a mobile communication system in which a transmission diversity method is implemented and in which: a base station transmits pilot signals, which are used in common among a plurality of mobile stations, via a plurality of antennas; and a mobile station feeds back phase control information, based on which the phase of a signal is controlled for the transmissions via said plurality of antennas respectively installed in said base station so that the phase of the signal will approach the phases of received common pilot signals, to said base station, wherein:

said base station includes as said plurality of antennas a reference antenna and a plurality of antennas other than said reference antenna; and
said base station includes a transmitting means for transmitting the common pilot signal via said reference antenna and for alternately transmitting the common pilot signal via said plurality of antennas other than said reference antenna.

5. A base station included in a mobile communication system in which a transmission diversity method is implemented and in which: a base station transmits pilot signals, which are used in common among a plurality of mobile stations, via a plurality of antennas; and a mobile station feeds back phase control signals, based on which the phase of a signal is controlled for the transmissions via said plurality of antennas respectively installed in said base station so that the phase of the signal will approach the phases of received common pilot signals, to said base station, wherein:

said base station includes as said plurality of antennas a reference antenna, a high-correlation antenna that causes a signal to highly correlate with a signal, which is transmitted via said reference antenna, in terms of fading, and a low-correlation antenna that causes a signal to hardly correlate with the signal, which is transmitted via said reference antenna, in terms of fading; and
said base station includes a transmitting means for transmitting the common pilot signal via said reference antenna, and for alternately transmitting the common pilot signal via said high-correlation antenna and low-correlation antenna so that the transmission frequency at which the common pilot signal is transmitted via said high-correlation antenna will be low and the transmission frequency at which the common pilot signal is transmitted via said low-correlation antenna will be high.

6. A base station according to Claim 5, further comprising a phase control means for controlling the phase of a signal for the transmission via said high-correlation antenna on the basis of the phase control information received at a low frequency from said mobile station, and for controlling the phase of the signal for the transmission via said low-correlation antenna on the basis of the phase control information received at a high frequency from said mobile station.

7. A base station included in a mobile communication system in which a transmission diversity method is implemented and in which: a base station transmits pilot signals, which are used in common among a plurality of mobile stations, via a plurality of antennas; and a mobile station feeds back phase control signals, based on which the phase of a signal is controlled for the transmissions via said plurality of antennas respectively installed in said base station so that the phase of the signal will approach the phases of received common pilot signals, to said base station, wherein:

> said base station includes as said plurality of antennas a reference antenna and a plurality of antennas other than said reference antenna;
> said base station includes a transmitting means for transmitting the common pilot signal via said reference antenna, and for transmitting the common pilot signal via said plurality of antennas other than said reference antenna at a frequency corresponding to a frequency at which the phase control signals are fed back from said mobile station.

8. A mobile station included in a mobile communication system in which a transmission diversity method is implemented and in which: a base station transmits pilot signals, which are used in common among a plurality of mobile stations, via a plurality of antennas; and a mobile station feeds back phase control signals, based on which the phase of a signal is controlled for the transmissions via said plurality of antennas respectively installed in said base station so that the phase of the signal will approach the phases of received common pilot signals, to said base station, said mobile station comprising:

> a receiving means for, when said plurality of antennas includes a reference antenna and a plurality of antennas other than said reference antenna, receiving the common pilot signal that is transmitted via said reference antenna, and receiving the common pilot signal that is alternately transmitted via said plurality of antennas other than said reference antenna; and
> a phase control means for calculating pieces of phase control information, which are applied to the transmissions via said plurality of antennas respectively other than said reference antenna, using the common pilot signals received by said receiving means.

9. A mobile station according to Claim 8, wherein said phase control means calculates pieces of phase control information, which are applied to the transmissions via said plurality of antennas respectively other than said reference antenna, at every time of receiving the common pilot signal that is transmitted via said reference antenna and the common pilot signal that is alternately transmitted via said plurality of antennas other than said reference antenna.

10. A mobile station included in a mobile communication system in which a transmission diversity method is implemented and in which: a base station transmits pilot signals, which are used in common among a plurality of mobile stations, via a plurality of antennas; and a mobile station feeds back phase control signals, based on which the phase of a signal is controlled for the transmissions via said plurality of antennas respectively installed in said base station so that the phase of the signal will approach the phases of received common pilot signals, to said base station, said mobile station comprising:

> a receiving means for, when said plurality of antennas includes a reference antenna, a high-correlation antenna that causes a signal to highly correlate with a signal, which is transmitted via said reference antenna, in terms of fading, and a low-correlation antenna that causes a signal to hardly correlate with the signal, which is transmitted via said reference antenna, in terms of fading, receiving the common pilot signal that is transmitted via said reference antenna, and receiving the common pilot signal that is transmitted at a low frequency via said high-correlation antenna; and
> a phase control means for calculating phase control information, based on which the phase of a signal is controlled for the transmission via said high-correlation antenna, using the common pilot signal that is transmitted via said reference antenna and the common pilot signal that is transmitted at a low frequency via said high-correlation antenna, and for calculating phase control information, based on which the phase of the signal is controlled for the transmission via said low-correlation antenna, using the common pilot signal that is transmitted via said reference antenna and the common pilot signal that is transmitted at a high frequency via said low-correlation antenna.

# Fig.1

# Fig.2

BASE STATION

11 — PILOT SIGNAL PRODUCTION UNIT

$P_1$ $P_2$ ••• $P_N$

DOWNSTREAM TRANSMISSION DATA SIGNAL

AMPLITUDE/PHASE CONTROL UNIT

12'

#1 — 16-1 — $h_1$

14-1

#2 — $h_2$ — 16-2

14-2

23 — MOBILE STATION — 2

CONTROL VALUE CALCULATION UNIT

21

$h_N$

#N — 16-N

14-N

13 — FEEDBACK INFORMATION EXTRACTING UNIT

17

FEEDBACK INFORMATION

24 — 22

MULTIPLEXING UNIT

UPSTREAM TRANSMISSION DATA SIGNAL

EP 1 453 223 A1

# Fig.3

FIRST GROUP  #1  #2  #K  SECOND GROUP  #(K+1)  #(K+2)  #(2K)  M-TH GROUP  #(M-1)K+1  #(M-1)K+2  #(MK)

16-1  16-2  16-N

$P_1$  $P_2$  $P_K$  $P_{K+1}$  $P_{K+2}$  $P_{2K}$  $P_{(M-1)K+1}$  $P_{(M-1)K+2}$  $P_{MK}$

$G_{1,2}$  $G_{1,K}$  $G_{2,2}$  $G_{2,K}$  $G_{M,2}$  $G_{M,K}$

$F_{1,2}$

$F_{1,M}$

EP 1 453 223 A1

# Fig.4

EP 1 453 223 A1

## Fig.5

Figure 5 — Block diagram showing a BASE STATION (1) and MOBILE STATION (2).

BASE STATION (1):
- DOWNSTREAM TRANSMISSION DATA SIGNAL
- PILOT SIGNAL PRODUCTION UNIT (11) — outputs $P_1$, $P_n$, $P_N$
- AMPLITUDE/PHASE CONTROL UNIT (12')
- FEEDBACK INFORMATION EXTRACTING UNIT (13)
- Adders 14-1, 14-n, 14-N
- Switches $SW_n$ (18-n), $SW_N$ (18-N)
- Multipliers 19-1, 19-n, 19-N with inputs $e_1$, $e_n$, $e_N$
- Antennas #1 (16-1), #n (16-n), #N (16-N), and 17
- Channels $h_1$, $h_n$, $h_N$

MOBILE STATION (2):
- CONTROL VALUE CALCULATION UNIT (21)
- MULTIPLEXING UNIT (22)
- Antennas 23, 24
- FEEDBACK INFORMATION
- UPSTREAM TRANSMISSION DATA SIGNAL

# Fig.6

EP 1 453 223 A1

Fig.7

# Fig.8

## (a)

| SLOT NUMBER | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| FEEDBACK INFORMATION | $b_0$ | $b_0$ | $b_0$ | $b_{B1}$ | $b_0$ | $b_0$ | $b_{B2}$ | $b_0$ | $b_0$ | $b_0$ | $b_{B1}$ | $b_0$ | $b_0$ | $b_{B2}$ | $b_0$ |
| SW$_2$ | off | off | off | on | off | off | off | off | off | off | on | off | off | off | off |
| SW$_4$ | off | off | off | off | off | off | on | off | off | off | off | off | off | on | off |

## (b)

| SLOT NUMBER | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| FEEDBACK INFORMATION | $b_0$ | $b_0$ | $b_0$ | $b_0$ | $b_0$ | $b_0$ | $b_{B1}$ | $b_0$ | $b_0$ | $b_0$ | $b_0$ | $b_0$ | $b_0$ | $b_{B2}$ | $b_0$ |
| SW$_2$ | off | off | off | off | off | off | on | off | off | off | off | off | off | off | off |
| SW$_4$ | off | off | off | off | off | off | off | off | off | off | off | off | off | on | off |

## (c)

| SLOT NUMBER | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| FEEDBACK INFORMATION | $b_0$ | $b_0$ | $b_{B1}$ | $b_0$ | $b_{B2}$ | $b_0$ | $b_0$ | $b_{B1}$ | $b_0$ | $b_{B2}$ | $b_0$ | $b_0$ | $b_{B1}$ | $b_0$ | $b_{B2}$ |
| SW$_2$ | off | off | on | off | off | off | off | on | off | off | off | off | on | off | off |
| SW$_4$ | off | off | off | off | on | off | off | off | off | on | off | off | off | off | on |

EP 1 453 223 A1

## INTERNATIONAL SEARCH REPORT

| | International application No. |
|---|---|
| | PCT/JP01/10520 |

A. CLASSIFICATION OF SUBJECT MATTER
    Int.Cl⁷   H04B7/06, H04B7/26

According to International Patent Classification (IPC) or to both national classification and IPC

B. FIELDS SEARCHED

Minimum documentation searched (classification system followed by classification symbols)
    Int.Cl⁷   H04B7/02-7/12, H04L1/02-1/06
              H04B7/24-7/26, H04Q7/00-7/38

Documentation searched other than minimum documentation to the extent that such documents are included in the fields searched

| | | | |
|---|---|---|---|
| Jitsuyo Shinan Koho | 1926-1996 | Jitsuyo Shinan Toroku Koho | 1996-2002 |
| Kokai Jitsuyo Shinan Koho | 1971-2002 | Toroku Jitsuyo Shinan Koho | 1994-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 4-150113 A (NEC Corporation), 22 May, 1992 (22.05.1992), Fig. 1 (Family: none) | 1-10 |
| A | JP 2001-168777 A (Matsushita Electric Ind. Co., Ltd.), 22 June, 2001 (22.06.2001), Fig. 1 (Family: none) | 1-10 |
| A | JP 2001-203614 A (Matsushita Electric Ind. Co., Ltd.), 27 July, 2001 (27.07.2001), Fig. 4 (Family: none) | 1-10 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 February, 2002 (22.02.02) | 05 March, 2002 (05.03.02) |

| Name and mailing address of the ISA/ Japanese Patent Office | Authorized officer |
|---|---|
| Facsimile No. | Telephone No. |

Form PCT/ISA/210 (second sheet) (July 1992)